# FASCICULE DE BREVET EUROPEEN

(11) **EP 1 541 048 B1**
(45) Date de publication et mention de la délivrance du brevet: **14.11.2007**
(21) Numéro de dépôt: 04028537.1
(22) Date de dépôt: 02.12.2004
(51) Int. Cl.: A43B 5/04, B29D 31/515, A43B 23/16

(54) **Chaussure de sport résistante et recyclable**
Rezyklierbarer, verformungsbeständiger Sportschuh
Biodegradable and deformation-resistant sports shoe

(30) Priorité: 09.12.2003 CH 20922003
(43) Date de publication de la demande: 15.06.2005
(73) Titulaire: LANGE INTERNATIONAL S.A., 1700 Fribourg (CH)
(72) Inventeur: Cagliari, Peter, 31044 Montebelluna (TV) (IT)
(74) Mandataire: Bugnion Genève

(56) Documents cités:
- EP-A- 0 582 553
- WO-A-02/49466
- FR-A- 2 766 065
- PATENT ABSTRACTS OF JAPAN vol. 2000, no. 21, 3 août 2001 (2001-08-03) & JP 2001 098083 A (SUMITOMO CHEM CO LTD; HAMADA YASUMOCHI), 10 avril 2001 (2001-04-10)

## Description

L'invention concerne une chaussure de sport, et est particulièrement adaptée aux chaussures pour planche de glisse telle que ski, surf ou chaussure de patinage, qui subissent des efforts importants lors de leur utilisation et pour lesquelles une structure particulièrement résistante est nécessaire. Elle concerne de plus un procédé de fabrication et un procédé de recyclage de telles chaussures.

Une chaussure de ski est un bon exemple de chaussure qui subit de nombreux efforts en course, et doit être dotée d'une bonne rigidité. Toutefois, elle doit aussi posséder une souplesse suffisante pour permettre au skieur d'ouvrir la chaussure pour la chausser et l'enlever, elle doit se déformer avec souplesse afin de s'ajuster étroitement autour de son pied, et elle doit permettre une souplesse vers l'avant pour que le skieur puisse fléchir ses genoux pendant la course.

Pour répondre à ces contraintes contradictoires, une première solution de l'art antérieur a consisté à réaliser la coque de la chaussure de sport dans une matière plastique ni trop raide ni trop souple, dont l'épaisseur est plus importante dans certaines zones choisies exigeant plus de rigidité. Une telle chaussure de sport de l'art antérieur est connue de la demande de brevet EP0903087, qui décrit une chaussure composée d'un chausson de confort en contact avec une âme rigide en polyuréthane, renforcée par une sur-épaisseur placée aux endroits de la chaussure transmettant des efforts latéraux. Un premier inconvénient de cette solution est qu'elle augmente grandement le poids global de la chaussure du fait des nombreuses sur-épaisseurs utilisées. Un second inconvénient provient du fait que les performances obtenues sont médiocres, tant au niveau de la souplesse que de la raideur, du fait du choix de la matière plastique.

Une autre solution de l'art antérieur décrite dans le document FR2119653 est une chaussure comprenant une coque composée d'une partie extérieure souple résistant à l'abrasion et à l'usure, de type polyuréthane, doublant une partie intérieure rigide, dans un matériau tel que l'acrylonitrile-butadiène-styrène (ABS) expansé.

Le document EP0645101 décrit une solution proche de la précédente mais dans laquelle la partie rigide intérieure est découpée de manière à présenter la forme générale d'un "Y" inversé.

Ces deux dernières solutions permettent de choisir un premier matériau de rigidité satisfaisante et un second matériau de souplesse convenable, et de les placer de manière flexible aux endroits particuliers nécessitant de la souplesse ou de la rigidité. Toutefois, cette double structure occupe une surface importante de la chaussure, ce qui présente toujours l'inconvénient d'un poids important. De plus, elle est difficile à produire.

En réponse à ces inconvénients, le document FR2766065 présente une chaussure de patinage dont la coque est une coque monobloc, composée d'un premier matériau souple de type polyuréthane de 180 à 350 Mpa, et d'un second matériau rigide consistant en un polyuréthane chargé de fibres de carbone.

Cette dernière solution évite la superposition des deux couches rigides et souples et permet de réduire le poids global de la chaussure. Toutefois, pour garantir une résistance satisfaisante, elle utilise un matériau comprenant des fibres de verre ou de carbone ou un équivalent, caractérisé notamment par une résistance très importante aux efforts de tension. Ces chaussures présentent alors l'inconvénient d'être difficilement recyclables car la séparation des différents matériaux utilisés est complexe. De plus, leur fabrication entraîne de nombreuses pertes de matériau.

Un objet de la présente invention consiste à proposer une chaussure de sport réunissant les avantages des solutions de l'art antérieur mais n'en présentant pas les inconvénients.

Plus précisément, un premier objet de l'invention consiste à proposer une chaussure de sport garantissant un bon compromis entre rigidité et souplesse, d'une résistance importante aux efforts mécaniques, et ne présentant pas un poids excessif.

Un second objet de l'invention consiste à proposer une chaussure de sport facilement recyclable notamment lors de la fabrication et dont le procédé de fabrication entraîne peu de pertes.

Un troisième objet de l'invention consiste à proposer une chaussure de sport simple et facile à fabriquer.

L'invention atteint ces objets en proposant une chaussure de sport comprenant un sous-ensemble dans un matériau plastique sous une forme normale, ce sous-ensemble comprenant un renfort qui est une structure armée composée d'une armature noyée dans une matrice, cette armature et sa matrice étant tous deux dans un matériau de même famille que le matériau du sous-ensemble.

Le sous-ensemble de la chaussure peut être dans un composé de polypropylène normal et le renfort, une structure composite armée constituée de fils de polypropylène noyés dans une matrice de polypropylène.

Dans un mode d'exécution, le sous-ensemble est la coque de la chaussure et le renfort est disposé au niveau du trottoir arrière et/ou avant de la coque.

Dans un autre mode d'exécution, le sous-ensemble est la coque de la chaussure et le renfort est disposé sur ses parties latérales.

Dans un autre mode d'exécution, le sous-ensemble est la coque et/ou le collier de la chaussure et le renfort est disposé au niveau de la liaison entre la coque et le collier.

Dans un autre mode d'exécution, le sous-ensemble est la semelle de la chaussure et le renfort se trouve intégré au sein de la semelle.

L'invention concerne aussi un procédé de fabrication d'une chaussure de sport comprenant les étapes suivantes :
a)-fabrication d'un renfort armé comprenant une armature formée de fils, noyée dans une matrice ;
b)-intégration du renfort à un sous-ensemble de chaussure de sport en regroupant le sous ensemble, une armature et une matrice du renfort, qui sont dans un matériau de même famille ;
c)-récupération des pertes de l'étape b) sans distinguer ni séparer les éléments de renfort du reste du sous-ensemble.

Selon l'invention, le procédé de fabrication d'une chaussure de sport peut comprendre les étapes détaillées suivantes : l'étape a) comprend la fabrication d'un renfort à partir d'une feuille thermoformée, l'étape b) comprend la surinjection sur le renfort pour former le sous ensemble, l'étape c) comprend le broyage des pertes afin d'obtenir des granulés qui sont réinjectés avec les autres granulés du stock de matériau destiné à la fabrication des chaussures de sport.

En outre, le procédé de fabrication d'une chaussure de sport peut comprendre l'étape a') de récupération des pertes de la fabrication de renfort de l'étape a) pour fabriquer d'autres renforts.

L'invention concerne aussi le procédé de recyclage d'une chaussure de sport qui comprend l'étape de broyage d'un sous-ensemble de la chaussure sans distinguer ni séparer les éléments de renfort du reste du sous-ensemble.

Ces objets, caractéristiques et avantages, ainsi que d'autres de la présente invention seront exposés en détail dans la description suivante d'un mode d'exécution particulier fait à titre non-limitatif en relation avec les figures jointes parmi lesquelles :
La figure 1 représente une vue en perspective d'un élément de renfort d'un mode d'exécution ;
La figure 2 représente une vue en perspective d'une chaussure de ski selon un mode d'exécution.

Le concept de l'invention consiste à utiliser la même famille de matériau pour la totalité d'une partie d'une chaussure de sport, incluant son ou ses renforts composé(s) d'une armature noyée dans une matrice. L'armature et la matrice seront donc tous deux dans un matériau de même famille que le reste de la partie de la chaussure.

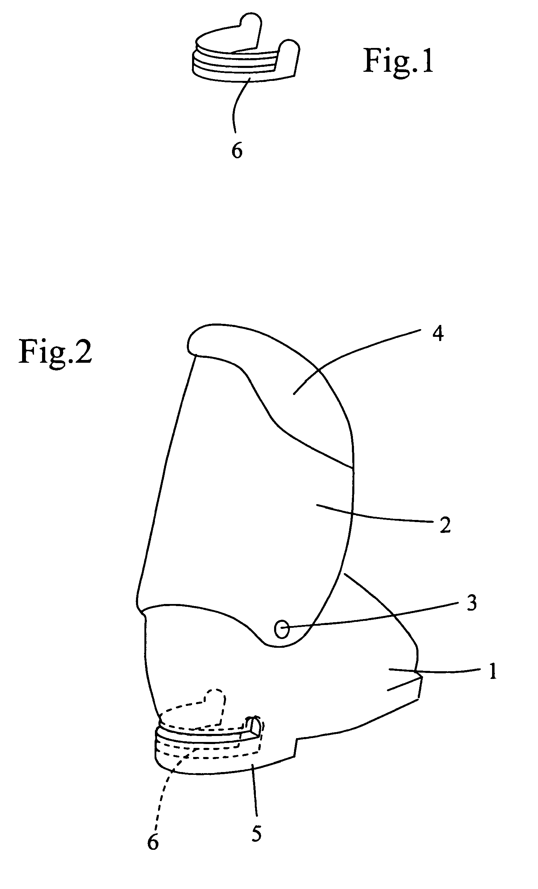

Un exemple d'implémentation est représenté sur la figure 2 qui décrit une chaussure de ski comprenant une coque 1, destinée à entourer le pied d'un skieur, en un composé de polypropylène, comprenant principalement du polypropylène rigide par exemple de dureté égale à 72 shd associé à des matériaux élastomériques comme ceux commercialisés sous les marques "Megol" et "Mafran", que nous appellerons polypropylène "normal" car il s'agit d'un matériau utilisé pour fabriquer des coques de chaussure de sport dans l'art antérieur. Cette coque 1 comprend un élément de renfort 6, représenté sur la figure 1, au niveau de son trottoir arrière 5. Ce renfort 6 est exclusivement en polypropylène que nous appèlerons polypropylène "armé", car il est dans une structure composite armée formée d'une armature de fibres, tissu ou tresses en polypropylène, noyée dans une matrice en polypropylène. On pourra par exemple utiliser le polypropylène armé commercialisé sous la marque "Curv" par BP, dont le module d'élasticité est de l'ordre de 5 Gpa. Ce polypropylène armé est thermoformable. Ce renfort arrière 6 permet d'éviter la déformation du trottoir arrière de la chaussure sous la force de pression de la mâchoire de la fixation qui a tendance à pénétrer et déformer les coques des chaussures, nuisant ainsi à l'efficacité du mécanisme de déclenchement de la fixation.

La chaussure de ski représentée sur la figure 2 comprend en outre un collier 2 de maintien de la cheville du skieur en polypropylène rigide normal, relié à la coque 1 par une liaison de type rivet permettant une rotation autour d'un axe 3 pour que le skieur puisse fléchir les genoux vers l'avant. A l'intérieur se trouve un chausson de confort 4, destiné à recevoir le pied du skieur.

L'invention n'est pas limitée à l'exemple de réalisation précédent et il est possible de l'appliquer à d'autres parties de la chaussure, comme le collier par exemple, avec un ou plusieurs éléments de renfort sur les endroits sensibles de la chaussure. Par exemple, il est possible de prévoir un élément de renfort sur le trottoir avant et des éléments de renfort latéraux, servant de déflecteur de piquet pour les chaussures de compétition. Un tel renfort au niveau de l'articulation entre la coque 1 et le collier 2 peut aussi être intéressant. La semelle peut aussi être renforcée de manière similaire. Ces modes d'exécution sont décrits dans la demande de brevet Suisse numéro 0498/03, dont le contenu est intégré.

Le principe de l'invention consiste donc à réaliser au moins une partie d'une chaussure de sport sous une forme allégée, renforcée avec un ou plusieurs renforts armés, l'ensemble de cette partie de chaussure n'utilisant qu'une même famille de matériau plastique sous plusieurs formes structurelles différentes, facilitant et optimisant ainsi sa fabrication et son recyclage, ce qui est exposé ci-après. Avantageusement, il est appliqué à des sous-ensembles de la chaussure, comme la coque ou le collier, ou à l'ensemble de la chaussure.

Le mode d'exécution précédent a été décrit avec une chaussure en polypropylène, mais d'autres matériaux plastiques pourront être utilisés, comme le polyéthylène, le polyamide, ou le polyuréthane par exemple.

La chaussure de sport selon l'invention possède donc les avantages suivants :
- elle est résistante vis à vis de l'abrasion et des efforts mécaniques subis grâce à l'utilisation de renforts armés associés à des matériaux plastiques rigides ;
- elle est facilement recyclable puisqu'elle possède des sous-ensembles formés exclusivement de matériaux de même famille, ce qui évite une étape longue et fastidieuse de tri de différents matériaux ;
- la liaison entre les éléments de renfort et la coque est consolidée car le fait d'utiliser des matériaux identiques garantit leur compatibilité pour une liaison physique optimale ;
- elle est allégée. En effet, l'utilisation de renfort permet d'alléger le poids de matériau nécessaire au sein de la coque elle-même. D'autre part, le renfort est lui-même dans un matériau léger ;
- elle est simple.

L'invention concerne aussi le procédé de fabrication d'une chaussure de ski. Dans le cadre du mode d'exécution représenté aux figures 1 et 2, une feuille de polypropylène armé est d'abord formée en noyant une armature formée de fils de polypropylène dans une matrice en polypropylène. Le renfort est ensuite formé selon sa forme finale représentée sur la figure 1 par thermoformage des feuilles précédentes. En variante, le renfort peut être produit par surinjection de polypropylène sur l'armature disposée dans un moule. Ce renfort 6 est ensuite disposé dans le moule de la coque au niveau du futur trottoir 5, avant le moulage de la coque 1 par surinjection, le renfort se trouvant alors directement intégré au sein du trottoir de la coque de manière indissociable.

Le rendement du procédé de fabrication d'une telle chaussure de sport est grandement amélioré, parce qu'il comprend les étapes essentielles suivantes :
a)-fabrication d'un élément de renfort armé à partir d'une feuille thermoformée ou par utilisation d'un moule spécifique pour noyer les fibres par surinjection,
b)-fabrication de la coque de la chaussure intégrant l'élément de renfort.
c)-récupération des pertes de l'étape précédente sans distinguer ni séparer les renforts du reste de la coque pour fabriquer des parties de chaussure.

Cette récupération pourra se faire par une première sous-étape de broyage des éléments de perte et une seconde sous-étape de réintégration des granulés obtenus avec le reste du matériau plastique utilisé pour fabriquer les chaussures, par exemple destiné à la fabrication de la coque des chaussures. Avec ce procédé, il n'y a plus aucune perte de matériau car tout est récupéré et utilisé pour la fabrication des chaussures de sport. Cette étape c) simplifie et améliore donc grandement le rendement du procédé de fabrication des chaussure de sport.

Les pertes de l'étape a) peuvent aussi être récupérées pour former des futurs éléments de renfort pour chaussure de sport.

D'autre part, le procédé de recyclage d'une telle chaussure de sport est aussi grandement simplifié car il comprend l'étape principale suivante :
- broyage d'un sous-ensemble de la chaussure sans distinguer ni séparer les éléments de renfort du reste de la coque.

Le principe de l'invention est compatible avec tout type de chaussures de sport, telles que les chaussures de ski, de patinage, de surf, que leur coque comprenne une association bi ou monobloc d'une partie rigide et d'une partie souple ou ne comprenne qu'une seule partie.

## Revendications

1. Chaussure de sport comprenant un sous-ensemble (1) dans un matériau plastique sous une forme normale, ce sous-ensemble comprenant un renfort (6), **caractérisée en ce que** le renfort (6) est une structure armée composée d'une armature formée de tissu ou tresses de fibres, noyée dans une matrice, cette armature et sa matrice étant tous deux dans un matériau de même famille que le matériau du sous-ensemble (1).

2. Chaussure de sport selon la revendication précédente **caractérisée en ce que** le sous-ensemble (1) de la chaussure est dans un composé de polypropylène normal et **en ce que** le renfort (6) est une structure composite armée constituée de fils de polypropylène noyés dans une matrice de polypropylène.

3. Chaussure de sport selon l'une des revendications précédentes **caractérisée en ce que** le sous-ensemble (1) est la coque de la chaussure et **en ce que** le renfort (6) est disposé au niveau du trottoir arrière et/ou avant de la coque.

4. Chaussure de sport selon l'une des revendications 1 ou 2 **caractérisée en ce que** le sous-ensemble (1) est la coque de la chaussure et **en ce que** le renfort (6) est disposé sur ses parties latérales.

5. Chaussure de sport selon l'une des revendications 1 ou 2 **caractérisée en ce que** le sous-ensemble est la coque et/ou le collier de la chaussure et **en ce que** le renfort (6) est disposé au niveau de la liaison entre la coque (1) et le collier (2).

6. Chaussure de sport selon l'une des revendications 1 ou 2 **caractérisée en ce que** le sous-ensemble est la semelle de la chaussure, le renfort se trouvant intégré au sein de la semelle.

7. Procédé de fabrication d'une chaussure de sport selon l'une des revendications 1 à 6 comprenant les étapes suivantes :
a)-fabrication d'un renfort (6) armé comprenant une armature formée de tissu ou tresses de fibres, noyée dans une matrice ;
b)-intégration du renfort (6) à un sous-ensemble (1) de chaussure de sport,
**caractérisé en ce que** l'étape b) regroupe un sous ensemble (1), une armature et une matrice du renfort (6), qui sont dans un matériau de même famille et **en ce que** le procédé comprend en outre l'étape suivante :
c)-récupération des pertes de l'étape b) sans distinguer ni séparer les éléments de renfort (6) du reste du sous-ensemble (1).

8. Procédé de fabrication d'une chaussure de sport selon la revendication 7 **caractérisé en ce que** l'étape a) comprend la fabrication d'un renfort (6) à partir d'une feuille thermoformée, l'étape b) comprend la surinjection sur le renfort (6) pour former le sous ensemble (1), l'étape c) comprend le broyage des pertes afin d'obtenir des granulés qui sont réinjectés avec les autres granulés du stock de matériau destiné à la fabrication des chaussures de sport.

9. Procédé de fabrication d'une chaussure de sport selon la revendication 8 **caractérisé en ce qu'**il comprend l'étape a') de récupération des pertes de la fabrication de renfort de l'étape a) pour fabriquer d'autres renforts.

10. Procédé de recyclage d'une chaussure de sport selon l'une des revendications 1 à 6 **caractérisé en ce qu'**il comprend l'étape de broyage d'un sous-ensemble de la chaussure sans distinguer ni séparer les éléments de renfort du reste du sous-ensemble.

## Claims

1. Sports boot comprising a subassembly (1) made of a plastic in a normal form, this subassembly including a reinforcement (6), **characterized in that** the reinforcement (6) is a reinforced structure made up of a reinforcing member formed from fabric or braids of fibres, which is embedded in a matrix, this reinforcing member and its matrix both being made of a material of the same family as the material of the subassembly (1).

2. Sports boot according to the preceding claim, **characterized in that** the subassembly (1) of the boot is made of a normal polypropylene compound and **in that** the reinforcement (6) is a reinforced composite structure consisting of polypropylene yarns embedded in a polypropylene matrix.

3. Sports boot according to either of the preceding claims, **characterized in that** the subassembly (1) is the shell of the boot and **in that** the reinforcement (6) is placed in the rear and/or front kerb of the shell.

4. Sports boot according to either of Claims 1 and 2, **characterized in that** the subassembly (1) is the shell of the boot and **in that** the reinforcement (6) is placed on its lateral parts.

5. Sports boot according to either of Claims 1 and 2, **characterized in that** the subassembly is the shell and/or the collar of the boot and **in that** the reinforcement (6) is placed in the join between the shell (1) and the collar (2).

6. The sports boot according to either of Claims 1 and 2, **characterized in that** the subassembly is the sole of the boot, the reinforcement being integrated into the sole.

7. Process for manufacturing a sports boot according to one of Claims 1 to 6, comprising the following steps:
a) manufacture of a reinforced reinforcement (6) comprising a reinforcing member formed from fabric or braids of fibres, which is embedded in a matrix;
b) integration of the reinforcement (6) into a sports boot subassembly (1),
**characterized in that** step b) brings together a subassembly (1), a reinforcing member and a matrix of the reinforcement (6), which are made of a material of the same family, and **in that** the process furthermore includes the following step:
c) recovery of the scrap from step b) without distinguishing or separating the reinforcement elements (6) from the rest of the subassembly (1).

8. Process for manufacturing a sports boot according to Claim 7, **characterized in that** step a) comprises the manufacture of a reinforcement (6) from a thermoformed sheet, step b) comprises injection overmoulding onto the reinforcement (6) in order to form the subassembly (1) and step c) comprises the grinding of the scrap in order to obtain granules that are reinjected with the other granules of the stock of material intended to manufacture the sports boots.

9. Process for manufacturing a sports boot according to Claim 8, **characterized in that** it includes step a') of recovering the scrap from the reinforcement manufacture of step a) in order to manufacture other reinforcements.

10. Method of recycling a sports boot according to one of Claims 1 to 6, **characterized in that** it includes the step of grinding a subassembly of the boot without distinguishing or separating the reinforcement elements from the rest of the subassembly.

## Patentansprüche

1. Sportschuh mit einem Unterteil (1) aus normalem Kunststoffmaterial, wobei dieses Unterteil eine Verstärkung (6) aufweist, **dadurch gekennzeichnet, dass** die Verstärkung (6) eine bewehrte Struktur hat, die aus einer Armierung besteht, welche aus einem in einer Matrize eingebettetem Fasergewebe oder Fasergeflecht gebildet ist, und dass diese Armierung und ihre Matrize beide aus einem Material derselben Familie wie das Material des Unterteils (1) bestehen.

2. Sportschuh nach dem vorangehenden Anspruch, **dadurch gekennzeichnet, dass** das Unterteil (1) des Schuhs aus einer normalen Polypropylenmasse besteht und dass die Verstärkung (6) eine bewehrte Verbundstruktur ist, die aus in eine Polypropylenmatrize eingebetteten Polypropylenfäden besteht.

3. Sportschuh nach einem der vorangehenden Ansprüche, **dadurch gekennzeichnet, dass** das Unterteil (1) die Schale des Schuhs ist und dass die Verstärkung (6) in Höhe des hinteren und/oder vorderen Vorsprungs der Schalensohle angeordnet ist.

4. Sportschuh nach einem der Ansprüche 1 oder 2, **dadurch gekennzeichnet, dass** das Unterteil (1) sie Schale des Schuhs ist und dass die Verstärkung (6) auf ihren Seitenteilen angeordnet ist.

5. Sportschuh nach einem der Ansprüche 1 oder 2, **dadurch gekennzeichnet, dass** das Unterteil die Schale und/oder die Manschette des Schuhs ist und dass die Verstärkung (6) in Höhe der Verbindung zwischen der Schale (1) und der Manschette (2) angeordnet ist.

6. Sportschuh nach einem der Ansprüche 1 oder 2, **dadurch gekennzeichnet, dass** das Unterteil die Sohle des Schuhs ist und dass die Verstärkung im Inneren der Sohle eingebettet ist.

7. Verfahren zur Herstellung eines Sportschuhs nach einem der Ansprüche 1 bis 6 mit den folgenden Schritten:
a) Herstellung einer Verstärkung (6) mit einer Armierung, die aus einem in einer Matrize eingebettetem Fasergewebe oder Fasergeflecht besteht;
b) Einfügen der Verstärkung (6) in ein Unterteil (1) des Sportschuhs;
**dadurch gekennzeichnet, dass** der Schritt b) ein Unterteil (1), eine Armierung und eine Verstärkermatrize zusammenfasst, welche aus einem Material derselben Familie bestehen, und dass das Verfahren ausserdem den folgenden Schritt umfasst:
c) Wiederverwertung der beim Schritt a) anfallenden Verluste ohne Unterscheidung und ohne Trennung der Verstärkung (6) vom Rest des Unterteils (1).

8. Verfahren nach Anspruch 7, **dadurch gekennzeichnet, dass** der Schritt a) die Herstellung einer Verstärkung aus einer wärmegeformten Folie umfasst, dass der Schritt b) das Überspritzen auf die Verstärkung (6) umfasst, um das Unterteil (1) zu bilden, und dass der Schritt c) die Zerkleinerung der Verluste umfasst, um Granulate zu erhalten, welche zusammen mit anderen Granulaten des zur Herstellung des Sportschuh bestimmten Materialvorrats wieder verspritzt werden.

9. Verfahren nach Anspruch 8, **dadurch gekennzeichnet, dass** es den Schritt a') der Wiederverwertung der Verluste bei der Herstellung der Verstärkung nach Schritt a) umfasst, um andere Verstärkungen herzustellen.

10. Verfahren zur Wiederverwertung eines Sportschuhs nach einem der Ansprüche 1 bis 6, **dadurch gekennzeichnet, dass** es den Schritt der Zerkleinerung des Unterteils des Schuhs umfasst, ohne dabei die Elemente der Verstärkung vom Rests des Unterteils weder unterscheiden noch trennen zu müssen.
